# EUROPÄISCHE PATENTANMELDUNG

(11) **EP 3 404 375 A1**
(43) Veröffentlichungstag der Anmeldung: **21.11.2018**
(21) Anmeldenummer: 18155573.1
(22) Anmeldetag: 17.05.2013
(51) Int. Cl.: G01F 23/284, G01S 13/42

(54) **MESSGERÄTESTEUERUNG ZUR BESTIMMUNG EINER TOPOLOGIE EINER OBERFLÄCHE EINES SCHÜTTGUTS**

(62) Teilanmeldung aus: 13168360.9
(71) Anmelder: VEGA Grieshaber KG, 77709 Wolfach (DE)
(72) Erfinder: WELLE, Roland, 77756 Hausach (DE); FEHRENBACH, Josef, 77716 Haslach (DE)
(74) Vertreter: Maiwald Patent- und Rechtsanwaltsgesellschaft mbH

(57) **Zusammenfassung**

Zur Bestimmung der Topologie einer Schüttgutoberfläche wird eine Serie an Echokurven unter verschiedenen Hauptabstrahlrichtungen der Antenne erfasst. Die Hauptabstrahlrichtung der Antenne kann hierbei derart geändert werden, dass sämtliche erzeugte Echokurven der Serie von Echokurven zur Bestimmung der Topologie der Schüttgutoberfläche verwendbar sind. Hierdurch kann die Messzeit reduziert werden.

## Beschreibung

### Gebiet der Erfindung

Die Erfindung betrifft die Füllstandmessung. Insbesondere betrifft die Erfindung ein Messgerät zum Bestimmen der Topologie einer Oberfläche eines in einem Behälter gelagerten Schüttguts, die Verwendung eines Messgeräts zur Bestimmung eines Volumenstroms eines Schüttguts, die Verwendung eines Messgeräts zur Bestimmung der Masse eines Schüttguts, ein Verfahren zum Bestimmen der Topologie einer Oberfläche eines Schüttguts, ein Programmelement und ein computerlesbares Medium.

### Technischer Hintergrund

Schüttgüter, die in einem Behälter gespeichert sind oder sich auf einem Förderband befinden, weisen im Regelfall eine unregelmäßige, unebene Oberfläche auf. Insbesondere kann es zur Ausbildung eines Schüttkegels oder eines Abzugstrichters kommen, wenn der Behälter gefüllt oder geleert wird.

Füllstandmessgeräte bestimmen bei dieser Konstellation den Füllstand oft ungenau, wenn lediglich die Entfernung zu einem einzigen Punkt an der Füllgutoberfläche bestimmt wird.

### Zusammenfassung der Erfindung

Es ist eine Aufgabe der Erfindung, die Zeit zur Bestimmung der Topologie einer Schüttgutoberfläche zu reduzieren.

Diese Aufgabe wird durch die Merkmale der unabhängigen Patentansprüche gelöst. Weiterbildungen der Erfindung ergeben sich aus den übrigen Ansprüchen und der folgenden Beschreibung.

Gemäß einem ersten Aspekt der Erfindung ist ein Messgerät zum Bestimmen der Topologie einer Oberfläche eines in einem Behälter gelagerten Schüttguts angegeben, welches eine Antennenanordnung, eine Echokurvenerzeugungseinheit und eine Stellvorrichtung aufweist.

Die Antennenanordnung dient dem Aussenden eines Sendesignals in einer Hauptabstrahlrichtung der Antennenanordnung und dem Empfang des zumindest an einer Oberfläche des Schüttguts reflektierten Sendesignals. Das reflektierte und von der Antennenanordnung aufgenommene bzw. empfangene Sendesignal kann auch als Empfangssignal bezeichnet werden.

Die Echokurvenerzeugungseinheit ist zum Erzeugen einer Echokurve auf dem reflektierten und von der Antennenanordnung empfangenen Sendesignal ausgeführt. Die Echokurve spiegelt hierbei die Signalstärke bzw. die Amplitude des reflektierten Sendesignals über einen Entfernungsmessbereich des Messgeräts wider. In anderen Worten bildet die Echokurve die Abhängigkeit der Amplitude des empfangenen, reflektierten Sendesignals von der Weglänge, die der entsprechende Signalanteil seit dem Aussenden des Sendesignals bis zu dessen Empfang durch die Antenne zurückgelegt hat, ab.

Eine derartige Echokurve weist im Regelfall ein Maximum (Peak) auf, welches auf die Reflexion des Sendesignals an der Füllgutoberfläche zurückzuführen ist. Es können noch weitere Maxima in der Echokurve enthalten sein, die auf Reflexionen an Störstellen im Behälter oder andere Reflektoren zurückzuführen sind.

Das Messgerät oder ein Teil des Messgerätes oder zumindest dessen Antenne ist mittels der Stellvorrichtung steuerbar, so dass die Hauptabstrahlrichtung der Antennenanordnung mit Hilfe der Stellvorrichtung verändert werden kann, so dass eine Serie von Echokurven unter verschiedenen Hauptabstrahlrichtungen erzeugt werden kann. Insbesondere kann eine einzige, mechanische oder elektronisch "schwenkbare" Antenne vorgesehen sein. Im Falle der mechanischen Verschwenkung der Antenne ist kein Antennenarray erforderlich.

Das Schwenken der Antenne mag eine Veränderung der Hauptabstrahlrichtung der vom Messgerät erzeugten Sendesignale bewirken. Das Schwenken der Antenne mag im vorliegenden Kontext auch durch eine Anordnung realisiert werden, welche aus zumindest einer Abstrahleinheit (beispielsweise einer Hornantenne) und zumindest einem im Strahlengang des Sendesignals befindlichen Ablenkelement (beispielsweise einer Metallplatte oder einem Spiegel oder einem anderen Reflektor) zur Veränderung der Ausbreitungsrichtung des Sendesignals besteht.

Mit Hilfe einer Auswerteeinheit kann die Topologie der Schüttgutoberfläche bestimmt werden. Unter dem Begriff "Topologie" der Schüttgutoberfläche bzw. des Schüttgutes ist hierbei das Oberflächenprofil, also der Oberflächenverlauf der Schüttgutoberfläche, zu verstehen. Der Oberflächenverlauf kann entlang einer Linie durch ein eindimensionales Abscannen der Oberfläche bestimmt werden (hierbei handelt es sich bei dem bestimmten Oberflächenprofil um einen ebenen, vertikalen Schnitt durch die Oberfläche des Schüttguts) oder, im Gegensatz zum vorhergenannten eindimensionalen Abscannen der Oberfläche, durch ein zweidimensionales Abscannen der Oberfläche. In diesem Fall handelt es sich also um die Bestimmung der Topologie der Schüttgutoberfläche in drei Dimensionen.

Um nun die Topologie der Schüttgutoberfläche in zwei Dimensionen oder in drei Dimensionen zu bestimmen, kann die Auswerteeinheit beispielsweise zur Durchführung der folgenden Schritte ausgeführt sein:
Zunächst wird eine erste Entfernungszelle festgelegt, bei der es sich um ein bestimmtes Entfernungsintervall in der Echokurve handelt. Im nächsten Schritt wird in jeder Echokurve der Serie von Echokurven diese Entfernungszelle analysiert, so dass diejenige Echokurve bestimmt werden kann, welche innerhalb der ersten Entfernungszelle im Vergleich zu den übrigen Echokurven die größte Signalstärke aufweist. Da jede Echokurve unter einer bestimmten Hauptabstrahlrichtung aufgenommen wurde, kann jede Echokurve eindeutig durch die Orientierung der Hauptabstrahlrichtung identifiziert werden. Auch werden der Wert und ggf. die genaue Lage der größten Signalstärke in der Entfernungszelle bestimmt.

Unter den Koordinaten eines solchen Messpunktes sind im Folgenden die die Hauptabstrahlrichtung charakterisierenden Winkel, unter der die entsprechende Echokurve erzeugt wurde, sowie die Lage (der "Ort") der größten Signalstärke in der Echokurve zu verstehen. Unter der Größe der Signalstärke ist die Amplitude der Echokurve am Ort der größten Signalstärke zu verstehen. Dieser "Ort" entspricht der mit der größten Signalstärke korrespondierenden Entfernung.

Die oben beschriebenen Schritte können dann für weitere Entfernungszellen der Echokurven durchgeführt werden.

Somit ist es möglich, die Echokurven in mehrere, aneinandergereihte Entfernungszellen aufzuteilen, oder zumindest einen bestimmten Abschnitt der Echokurven in mehrere Entfernungszellen aufzuteilen, für welche die oben beschriebenen Schritte durchgeführt werden.

In anderen Worten werden mehrere Echokurven jeweils unter einem anderen Winkel (also unter einer anderen Hauptabstrahlrichtung der Antennenanordnung) aufgenommen. Die Hauptabstrahlrichtung der Antennenanordnung kann mechanisch durch geeignetes Verstellen der Antennenanordnung und/oder eines Reflektors, der das Sendesignal auf seinem Weg von der Antenne zur Schüttgutoberfläche reflektiert, vorgenommen werden. Auch ist es möglich, die Hauptabstrahlrichtung elektronisch zu verstellen, beispielsweise indem ein entsprechend angesteuertes Antennenarray vorgesehen ist.

Nach Aufnahme der Serie von Echokurven wird die erste Entfernungszelle der Echokurven definiert und dann wird zu jeder Echokurve das Maximum der Echokurve in dieser Entfernungszelle identifiziert. Als nächstes wird bestimmt, welches Maximum der verschiedenen Echokurven das größte Maximum ist und es werden dessen Koordinaten bestimmt. Diese Schritte werden dann für weitere Entfernungszellen durchgeführt. Je nachdem, ob die Hauptabstrahlrichtung der Antenne in eine Raumrichtung oder in zwei Raumrichtungen geändert wurde, kann hieraus dann eine Schnittlinie oder eine dreidimensionale Darstellung der Schüttgutoberfläche berechnet werden.

Die Auswerteeinheit kann ausgeführt sein, unter Verwendung der in den oben beschriebenen Schritten erhaltenen Daten den Füllstand des in einem Behälter befindlichen Schüttguts und/oder das Schüttgutvolumen des Schüttguts zu bestimmen.

Die Topologie der Schüttgutoberfläche kann selbstverständlich auch durch die Durchführung anderer Verfahren bestimmt werden.

Gemäß einem Aspekt der Erfindung weist die Stellvorrichtung eine Steuerung auf, welche zum Ändern der Hauptabstrahlrichtung der Antennenanordnung derart ausgeführt ist, dass ein möglichst großer Anteil an den erzeugten Echokurven der Serie von Echokurven zur Bestimmung der Topologie verwendbar ist.

In anderen Worten ist die Steuerung ausgeführt, dafür Sorge zu tragen, dass lediglich die Gebiete der Schüttgutoberfläche von der Antennenanordnung abgescannt werden (indem die Hauptabstrahlrichtung auf diese Gebiete gelenkt wird), welche auch zur Bestimmung der Topologie notwendig und gewünscht sind. Beispielsweise kann es die Steuerung verhindern, dass die Hauptabstrahlrichtung der Antennenanordnung an der Schüttgutoberfläche vorbeigeht.

Insgesamt lässt sich hierdurch die Anzahl der in einem Messzyklus zur Schüttgutoberflächenbestimmung aufgenommenen Messkurven erheblich reduzieren. Dies kann zu einer schnelleren Bestimmung der Schüttgutoberflächentopologie und somit des Füllstandes von Schüttgütern führen, die in einem Behälter gespeichert sind, oder des Massestroms eines Schüttguts auf einem Förderband, welche mit möglichst geringer Messzeit auskommt.

Wird beispielsweise bei einer vernünftigen Mindestauflösung der zu bestimmenden Topologie die Hauptabstrahlrichtung in beiden Raumrichtungen über einen Bereich von 180 Grad geändert, beträgt die Anzahl der hierfür aufzunehmenden Echokurven mehr als 30000 (unter der Annahme einer Aufrasterung in 1 Grad Schritten). Geht man von der Erfassung von zwei Kurven pro Sekunde aus, wie dies bei der Verwendung einer 4...20mA Stromschleife zur Messwertübertragung ohne Energieversorgung des Messgeräts oft vorgesehen ist, würde die Aufnahme sämtlicher für die Topologiebestimmung notwendiger Messkurven mehr als 15.000 Sekunden betragen.

Soll nun die hierfür erforderliche Messzeit reduziert werden, könnte beispielsweise die Leistungsversorgung des Messgeräts gesteigert werden. In diesem Fall würde allerdings eine 4...20mA Messschleife nicht genügend Leistung liefern können.

Gemäß einer AUsführungsform werden (zumindest größtenteils) jedoch lediglich diejenigen Echokurven erfasst, welche auch tatsächlich zur Bestimmung der Topologie verwendet werden sollen. Anders ausgedrückt werden keine Echokurven erfasst, von denen das Messgerät annimmt, dass sie nicht zur Bestimmung der Topologie geeignet sind, da mit hoher Sicherheit davon auszugehen ist, dass diese Echokurven keinen Beitrag für die Topologiebestimmung liefern können, beispielsweise, weil die damit zusammenhängende Hauptabstrahlrichtung an der Schüttgutoberfläche vorbei geht.

Hierdurch kann die Anzahl der aufzunehmenden Echokurven erheblich reduziert werden.

Beispielsweise ist die Steuerung zum Ändern der Hauptabstrahlrichtung der Antennenanordnung derart ausgeführt, dass sämtliche von der Stellvorrichtung eingestellte Hauptabstrahlrichtungen innerhalb eines dreidimensionalen Raumes liegen, der die Behälterwand nicht (oder nur geringfügig) oberhalb eines zuletzt von dem Messgerät bestimmten Füllstands im Behälter berührt bzw. schneidet. In anderen Worten sind die unterschiedlichen, eingestellten Hauptabstrahlrichtungen stets auf die Füllgutoberfläche gerichtet und gehen nicht an ihr vorbei.

Gemäß einer weiteren Ausführungsform der Erfindung ist die Steuerung beim Ändern der Hauptabstrahlrichtung der Antennenanordnung zur Berücksichtigung der Geometrie des Behälters, in dem das Schüttgut gelagert ist, ausgeführt.

Beispielsweise ist die Grundfläche des Körpers bzw. des dreidimensionalen Raumes, den die unterschiedlichen, einzustellenden Hauptabstrahlrichtungen aufspannen, an die Grundfläche des Behälters angepasst. Bei einem Behälter mit runder Grundfläche scannt die Stellvorrichtung eine runde Fläche ab und bei einem Behälter mit quadratischem Querschnitt wird eine quadratische Fläche abgescannt.

Gemäß einer weiteren Ausführungsform der Erfindung ist die Steuerung zum Ändern der Hauptabstrahlrichtung der Antennenanordnung ausschließlich innerhalb eines, einen Teilbereich der Schüttgutoberfläche definierenden Winkelbereichs ausgeführt.

In anderen Worten wird nicht die gesamte Schüttgutoberfläche abgescannt.

Gemäß einer weiteren Ausführungsform der Erfindung ist die Steuerung zur Bewegung der Hauptabstrahlrichtung entlang einer spiralförmigen Bahn ausgeführt.

Gemäß einer weiteren Ausführungsform der Erfindung ist die Steuerung zur Einstellung des Winkelunterschieds zwischen zwei Hauptabstrahlrichtungen der Antennenanordnung, die für die Erzeugung von zwei aufeinanderfolgenden Echokurven verwendet werden, in Abhängigkeit des zuletzt von dem Messgerät bestimmten Füllstands ausgeführt.

So kann beispielsweise der Winkelunterschied zwischen den beiden Hauptabstrahlrichtungen größer sein, wenn der Füllstand hoch ist, und entsprechend kleiner, wenn der Füllstand niedrig ist, um jeweils die gewünschte Auflösung zu erreichen.

Gemäß einer weiteren Ausführungsform der Erfindung ist die Steuerung zur Einstellung des Winkelunterschieds zwischen zwei Hauptabstrahlrichtungen der Antennenanordnung, die für die Erzeugung von zwei aufeinanderfolgenden Echokurven verwendet werden, in Abhängigkeit von einer lokalen Topologie der Schüttgutoberfläche ausgeführt.

Beispielsweise kann vorgesehen sein, dass der Winkelunterschied zwischen den beiden Hauptabstrahlrichtungen dort am geringsten ist, wo sich die Topologie der Schüttgutoberfläche am stärksten ändert, beispielsweise wo die Schüttgutoberfläche am steilsten ist.

Gemäß einer weiteren Ausführungsform der Erfindung ist die Steuerung zur Bestimmung des maximalen Winkels der Hauptabstrahlrichtung der Antennenanordnung in Abhängigkeit des zuletzt von dem Messgerät bestimmten Füllstands ausgeführt.

Je höher der Füllstand, desto größer ist dieser maximale Winkel.

Gemäß einer weiteren Ausführungsform der Erfindung weist das Messgerät eine 4...20mA Kommunikationsschnittstelle zum Anschluss an eine 4...20mA Zweidrahtleitung auf, wobei das Füllstandmessgerät ausgeführt sein kann, lediglich über die 4...20mA Kommunikationsschnittstelle extern mit Energie versorgt zu werden. Natürlich kann eine interne Energieversorgung in Form eines Akkus oder Kondensators vorgesehen sein. Auch eine externe Versorgung mit Energie an einer anderen Schnittstelle mag möglich und vorgesehen sein.

Gemäß einer weiteren Ausführungsform der Erfindung weist das Messgerät eine Ethernet-Kommunikationsschnittstelle zum Anschluss an ein lokales Netzwerk (Local Area Network, LAN) auf, wobei das Füllstandmessgerät ausgeführt sein kann, lediglich über diese Ethernet-Kommunikationsschnittstelle mit externer Energie versorgt zu werden.

Auch eine externe Versorgung mit Energie an einer anderen Schnittstelle mag möglich und vorgesehen sein.

Ethernet- und 4...20mA Kommunikationsschnittstelle können auch gleichzeitig vorgesehen sein.

Gemäß einer weiteren Ausführungsform der Erfindung ist die Stellvorrichtung zur Änderung der Hauptabstrahlrichtung der Antennenanordnung unter Zuhilfenahme einer mechanischen Verstellvorrichtung ausgeführt, mit Hilfe derer die Ausrichtung der Antennenanordnung mechanisch verstellt werden kann.

Gemäß einer weiteren Ausführungsform der Erfindung weist die Stellvorrichtung zur Änderung der Hauptabstrahlrichtung der Antennenanordnung einen Reflektor und eine mechanische Verstellvorrichtung zur Änderung der Lage des Reflektors und somit zur Änderung der Hauptabstrahlrichtung der Antennenanordnung auf.

Auch kann vorgesehen sein, dass sowohl die Antennenausrichtung als auch der Reflektor mit Hilfe der Stellvorrichtung eingestellt werden können.

Gemäß einer weiteren Ausführungsform der Erfindung ist das Messgerät als Füllstandmessgerät ausgeführt. Insbesondere kann das Messgerät als Pulsradargerät oder FMCW-Füllstandmessgerät (FMCW: Frequency Modulated Continuous Wave) ausgeführt sein.

Gemäß einem weiteren Aspekt der Erfindung ist die Verwendung eines oben und im Folgenden beschriebenen Messgeräts zur Bestimmung eines Volumenstroms eines Schüttguts, der sich auf einem Förderband befindet, angegeben.

Gemäß einem weiteren Aspekt der Erfindung ist die Verwendung eines oben und im Folgenden beschriebenen Messgeräts zur Bestimmung der Masse eines Schüttguts angegeben.

Zur Bestimmung der Masse bzw. des Volumenstroms wird die Kenntnis der erfindungsgemäß bestimmten Topologie verwendet.

Gemäß einem weiteren Aspekt der Erfindung ist ein Verfahren zum Bestimmen der Topologie einer Oberfläche eines Schüttguts angegeben, bei dem zunächst ein Sendesignal in eine Hauptabstrahlrichtung einer Antennenanordnung ausgesendet wird. Der zumindest an einer Oberfläche des Schüttguts reflektierte Signalanteil des Sendesignals wird daraufhin von der Antennenanordnung empfangen und es wird eine Echokurve aus dem reflektierten und von der Antennenanordnung empfangenen Sendesignal erzeugt, welche die Signalstärke des reflektierten Sendesignals über einen Entfernungsmessbereich des Messgeräts widerspiegelt. Danach wird die Hauptabstrahlrichtung der Antennenanordnung derart geändert, dass eine Serie von Echokurven unter verschiedenen Hauptabstrahlrichtungen erzeugt wird, wobei die Anzahl an erzeugten Echokurven der Serie von Echokurven, welche nicht zur Bestimmung der Topologie verwendbar sind, minimiert wird. Im Idealfall können sämtliche erzeugte Echokurven der Serie von Echokurven zur Bestimmung der Topologie der Oberfläche verwendet werden.

An dieser Stelle sei darauf hingewiesen, dass die oben und im Folgenden beschriebenen Merkmale des Messgeräts auch als Verfahrensschritte in das Verfahren implementiert werden können, und umgekehrt.

Gemäß einem weiteren Aspekt der Erfindung ist ein Programmelement angegeben, das, wenn es auf dem Prozessor eines Messgeräts ausgeführt wird, das Messgerät veranlasst, die oben und im Folgenden beschriebenen Schritte durchzuführen.

Gemäß einem weiteren Aspekt der Erfindung ist ein computerlesbares Medium angegeben, auf dem ein Programmelement gespeichert ist, das, wenn es auf dem Prozessor eines Messgeräts ausgeführt wird, das Messgerät veranlasst, die oben und im Folgenden beschriebenen Schritte durchzuführen.

Das Programmelement kann Teil einer Software sein, die auf einem Prozessor des Messgeräts gespeichert ist. Auch betrifft die Erfindung ein Programmelement, welches durch eine Aktualisierung (Update) ein bestehendes Programm zur Verwendung der Erfindung veranlasst.

Es kann als ein Kernaspekt der Erfindung angesehen werden dass die Kenntnis der Behältergeometrie, und insbesondere der Form und der Größe des Behälterquerschnitts, sowie der aktuelle Füllstand zur Auswahl der für die Messungen verwendeten Hauptabstrahlrichtungen berücksichtigt werden. Die Kenntnis über die Behältergeometrie kann vom Benutzer vorgegeben sein oder das Messgerät erlangt diese Kenntnis über einen Selbstlernmodus. Auch kann der Benutzer den aktuellen Füllstand selbstständig eingeben oder das Messgerät misst ihn in einer Vormessung.

Im Folgenden werden mit Verweis auf die Figuren Ausführungsbeispiele der Erfindung beschrieben.

### Kurze Beschreibung der Figuren

Fig. 1 zeigt ein Füllstandmessgerät zur Messung eines Füllstands sowie eine durch das Messgerät erzeugte Echokurve.
Fig. 2 zeigt ein Füllstandmessgerät, dessen Hauptabstrahlrichtung verschwenkt werden kann sowie zwei unter verschiedenen Hauptabstrahlrichtungen aufgenommene Echokurven.
Fig. 3 zeigt, wie aus einzelnen Messungen eine Topologie einer Schüttgutoberfläche bestimmt werden kann.
Fig. 4A bis 4E zeigen fünf Beispiele für Bahnen, entlang derer ein Abscannen der Schüttgutoberfläche erfolgen kann.
Fig. 5A und 5B zeigen ein weiteres Beispiel zur Vermeidung unnötiger Messungen.
Fig. 6A und 6B zeigen ein Beispiel für die Beschränkung des maximalen Winkels der Hauptabstrahlrichtung.
Fig. 7A und 7B zeigen ein weiteres Beispiel zur Reduktion der Messzeit.
Fig. 8A und 8B zeigen ein weiteres Ausführungsbeispiel eines Messverfahrens.
Fig. 9 zeigt ein Messgerät gemäß einem weiteren Ausführungsbeispiel der Erfindung.
Fig. 10 zeigt eine Messanordnung gemäß einem Ausführungsbeispiel der Erfindung.
Fig. 11 zeigt eine Messanordnung gemäß einem Ausführungsbeispiel der Erfindung.
Fig. 12 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Die vorliegende Erfindung wird insbesondere im Umfeld von Füllstandmessgeräten angewendet, wobei aber auch eine Anwendung im Bereich der Objektüberwachung oder der Massenstromerfassung möglich und vorgesehen ist.

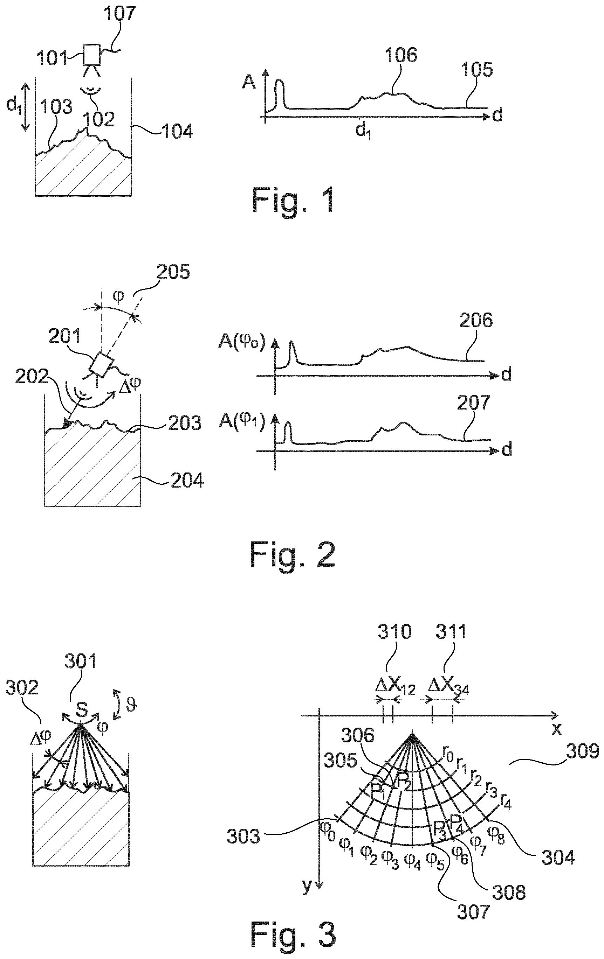

Fig. 1 zeigt ein Füllstandmessgerät 101, das durch Aussenden eines Signals 102 in Richtung einer Füllgutoberfläche 103 ein Abbild der Reflexionsverhältnisse im Behälter 104 in Form einer Echokurve 105 erzeugt.

Die Echokurve beinhaltet ein sehr breites Echoband 106, das durch die Überlagerung einer Vielzahl von Einzelreflektionen der Schüttgutoberfläche 103 erzeugt wird. Mit diesem Verfahren kann der Füllstand d₁ im Behälter 104 näherungsweise bestimmt werden, und über eine Kommunikationsschnittstelle (107), beispielsweise eine analoge 4 ... 20 mA Schnittstelle oder eine digitale Schnittstelle, nach außen hin bereitgestellt werden. Eine Aussage über die Topologie der Oberfläche des Schüttgutes ist oft nur sehr eingeschränkt möglich.

Bessere Ergebnisse lassen sich mit einer Vorrichtung zur Erfassung der Topologie einer Oberfläche bestimmen. Figur 2 zeigt beispielhaft eine solche Anordnung. Das topologieerfassende Messgerät 201 soll beispielhaft durch eine drehbare Aufhängung des Gerätes selbst oder eines Teils des Gerätes (z.B. die Antenne) in der Lage sein, die Hauptstrahlrichtung 202 des Messgerätes zu verändern. Eine solche Veränderung der Hauptstrahlrichtung kann beispielsweise durch den Einsatz sogenannter Antennenarrays oder durch die Verwendung mehrerer Antennen realisiert werden. Weiterhin kann eine solche Veränderung der Hauptstrahlrichtung des Messgerätes auch durch weitere technische Maßnahmen erreicht werden, z.B. durch ein Verschwenken der Antenne oder des gesamten Messgeräts.

Durch eine sukzessive Veränderung der Hauptstrahlrichtung 202 mag es möglich sein, die Oberfläche 203 eines Mediums 204 aus verschiedenen Winkelrichtungen 205 auszumessen. Die dabei erfassten Echokurven 206, 207 verdeutlichen die Reflexionsverhältnisse in die jeweilige Richtung. Mit ihnen ist es möglich, die Topologie der Oberfläche 203 im Messgerät 201 oder einer geeigneten Auswerteeinrichtung zu bestimmen.

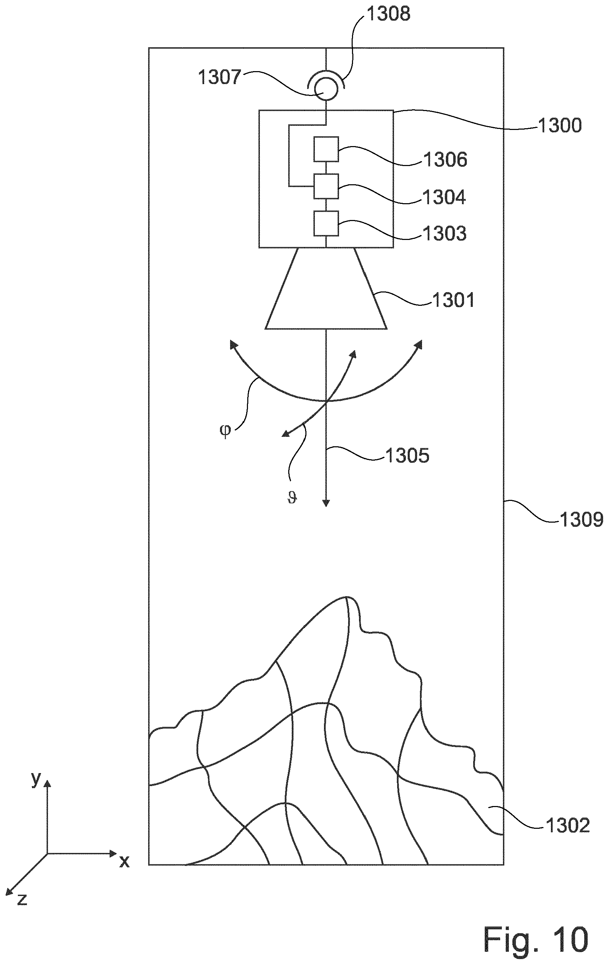

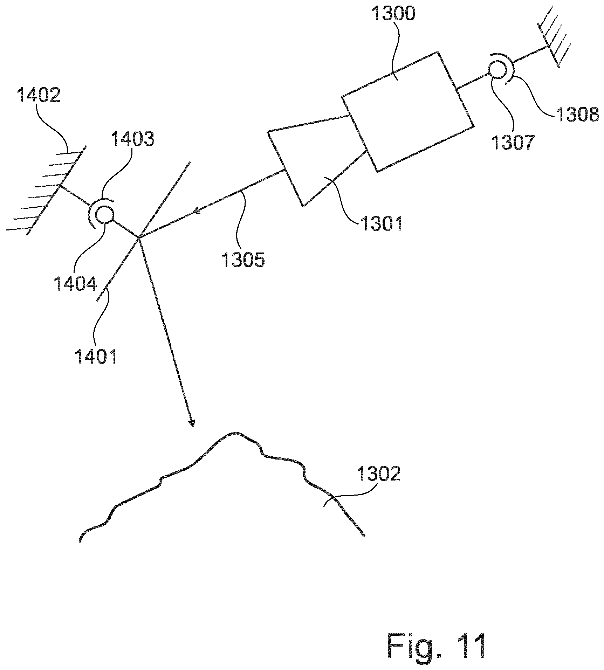

Das Ausführungsbeispiel der Fig. 2 zeigt ein 2-dimensional arbeitendes Messgerät zur Erfassung einer Topologie entlang einer einzigen Ausdehnungsrichtung einer Oberfläche. In den Figuren 10 und 11 sind darüber hinaus Anordnungen angegeben, die durch eine Verstellung der Hauptstrahlrichtung 202 der Messanordnung in Azimut- als auch in Elevationsrichtung eine dreidimensionale Erfassung und Bestimmung der Topologie der Oberfläche in einem Behälter ermöglichen.

Die nachfolgenden Ausführungsbeispiele dieser Anordnung beschränken sich wegen der einfacheren grafischen Darstellung oft auf den zweidimensionalen Fall. Selbstverständlich können die hier beschriebenen Aspekte sowohl für den zweidimensionalen als auch für den Fall einer dreidimensionalen Messung verwendet werden.

Fig. 3 zeigt verschiedene Positionen der Hauptstrahlrichtung eines topologieerfassenden Messgerätes 301. Die Hauptstrahlrichtung wird nach der Erfassung einer Echokurve 206, 207 um einen vorgegebenen Winkel Δ*ϕ* 302 verstellt. Die Winkelauflösung Δ*ϕ* entspricht dabei der durch den Aufbau des Gerätes erreichbaren maximalen Winkelauflösung. Der erreichbare Winkelbereich zwischen *ϕₘᵢₙ* 303 und *ϕₘₐₓ* 304 wird ebenfalls durch die Konstruktion des Gerätes bestimmt.

Das Auswerteverfahren bestimmt auf Basis der erfassten Echokurven 206, 207 die Lage einzelner Stützstellen der Oberfläche in der Ergebnismatrix 309. Die Ergebnismatrix kann verfahrensbedingt durch eine Polarkoordinatendarstellung geprägt sein. Beim Übergang auf kartesische Koordinaten fällt jedoch auf, dass die laterale Auflösung (d.h. die Auflösung in Richtung der X-Achse bzw. in Richtung der Y-Achse) des Verfahrens nicht in allen Bereichen gleich gut ist. So kann beispielsweise im Bereich der Punkte P1 305 und P2 306 auf einer Strecke Δ*X*₁₂ 310 eine recht hohe Auflösung entlang der X-Richtung erreicht werden. Die durch das Verfahren ebenfalls aufgefundenen Punkte P3 307 und P4 308 besitzen hingegen einen auf die X-Achse projizierten Abstand von Δ*X*₃₄ 311, der deutlich größer ist als der Abstand der Punkte P1 305 und P2 306.

Für die praktische Anwendung eines solchen Verfahrens folgt daraus, dass die Rasterung Δ*ϕ* 302 des Messgerätes sehr klein gewählt werden muss, um auch für die ungünstig gelegenen Punkte der Ergebnismatrix eine vorgegebene Mindestauflösung 310 sicherstellen zu können.

Daraus folgt andererseits, dass eine hohe Zahl an Messungen für die Erfassung einer Oberfläche erforderlich wird, was einhergeht mit hohen Anforderungen an die Vorrichtung zur Verstellung der Hauptstrahlrichtung, aber auch mit hohem Energiebedarf für die Durchführung einer Vielzahl von Messungen. Weiterhin wird die Zeit zur Erfassung der Oberflächentopologie massiv erhöht.

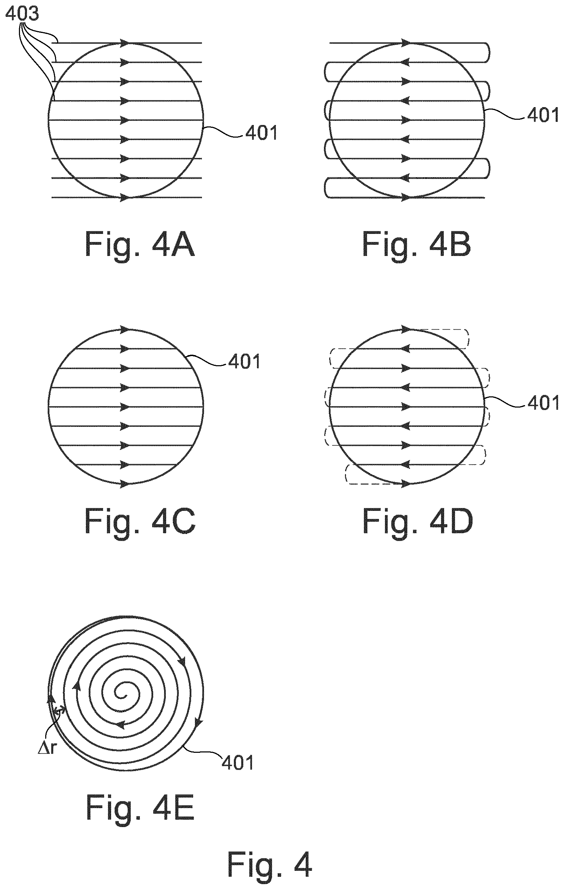

Fig. 4A bis 4E zeigen einen ersten Ansatz zur Reduzierung der Anzahl notwendiger Messungen. Die Fig. 4A zeigt eine Draufsicht auf einen Behälter 401, welcher aus Vereinfachungsgründen zunächst als runder Behälter betrachtet werden soll. Ein Messgerät 301 kann den Behälter mit seiner Hauptstrahlrichtung 202 entlang einzelner Zeilen 403 im vorgegebenen, abgebildeten Raster abscannen.

Die Grenzen des Scangebietes werden im Allgemeinen durch die physikalische Grenze der erreichbaren Winkelbereiche zwischen *ϕₘᵢₙ* 303 und *ϕₘₐₓ* 304 bzw. *ϑₘᵢₙ* und *ϑₘₐₓ* bestimmt.

In einer alternativen Ausführung, die in Fig. 4B gezeigt ist, kann auch ein mäanderförmiger Scan 404 realisiert sein. Schwachpunkt beider Realisierungen ist, dass das durch die Hauptstrahlrichtungen erfasste Gebiet stets größer als der Durchmesser des Behälters 401 ist, was zu unnötigen Messungen führt. Sinngemäß gilt dieses Problem auch für andere Behälterformen.

Die Figuren 4C und 4D zeigen weitere Ausführungsbeispiele des Verfahrens. Wie aus den Figuren 4C und 4D deutlich ersichtlich, werden nur im interessierenden Bereich des Behälters Messungen durchgeführt. Dies führt zu deutlich weniger Messungen ohne Einbußen im Hinblick auf die Topologiebestimmung.

Fig. 4E zeigt einen gänzlich neuen Ansatz für runde Behälter, in welchem die Hauptstrahlrichtung entlang einer Spirale mit vorgebbarem Abstand Δr zwischen den aufeinanderfolgenden Spiralsegmenten geführt wird. Bei elliptischen Behältern kann selbstverständlich eine elliptische Bahn vorgesehen sein.

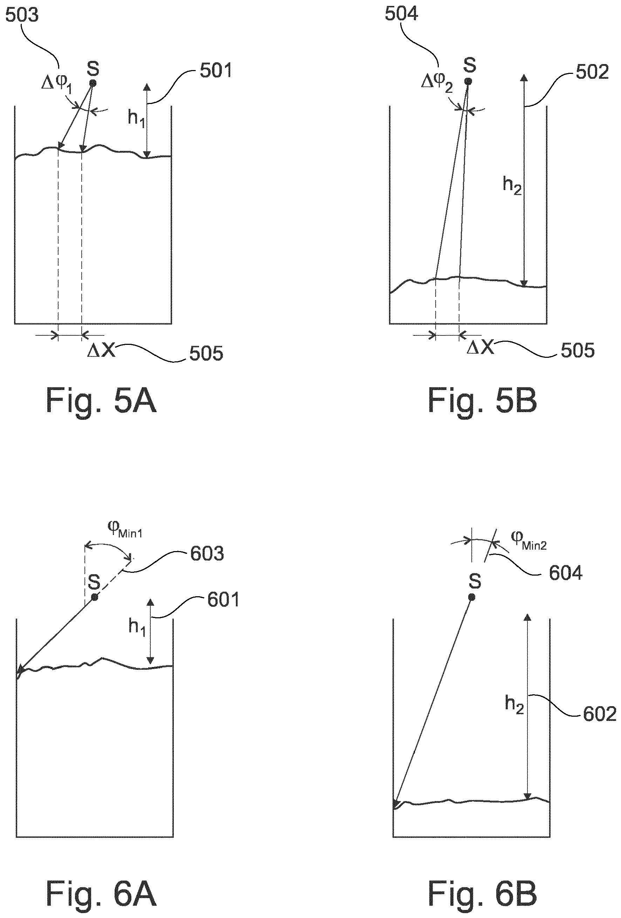

Die Figuren 5A und 5B zeigen einen anderen Ansatz zur Vermeidung unnötiger Messungen. Abhängig von der Höhe des aktuellen Füllstandes 501, 502, welcher beispielsweise durch vorausgehende Messungen bekannt ist, kann die Rasterung Δ*ϕ* des Messgerätes dynamisch angepasst werden. Obwohl die Rasterung Δ*ϕ*₁ 503 größer ist als die Rasterung Δ*ϕ*₂ 504 ergibt sich nach der Auswertung die identische laterale Auflösung Δ*X* 505.

Weiterhin kann gemäß einem weiteren Ausführungsbeispiel die Anzahl an Messungen durch eine Beschränkung der Maximalwinkel *ϕₘᵢₙ* 303 und *ϕₘₐₓ* 304 weiter reduziert werden. Die Figuren 6A und 6B zeigen eine entsprechende Anordnung. Abhängig von der Höhe des aktuellen Füllstandes 601, 602 kann ohne Einbußen an Information sowohl der Minimalwinkel *ϕₘᵢₙ* 603, 604 als auch der hier nicht dargestellte Maximalwinkel *ϕₘₐₓ* dynamisch festgelegt werden.

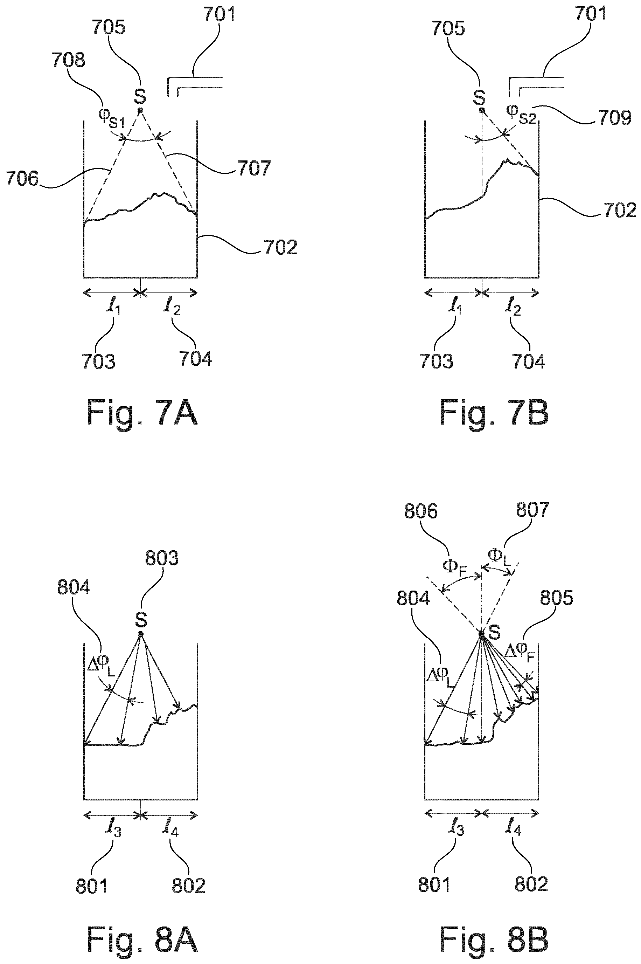

Fig. 7 zeigt eine weitere Möglichkeit zur Reduktion des messtechnisch - algorithmischen Aufwandes bei der Bestimmung der Topologie einer Oberfläche. Der abgebildete Behälter 702 wird über eine Befüllvorrichtung 701 mit dem Medium befüllt. Da an dieser Stelle konstruktionsbedingt damit zu rechnen ist, dass sich die Oberfläche in einzelnen Bereichen 704 sehr schnell verändert, wohingegen andere Bereiche 703 eher durch langsame Veränderungen gekennzeichnet sind, kann ein Betriebsmodus vorgesehen werden, in welchem das Messgerät 705 zunächst den gesamten Bereich 703, 704 der Oberfläche vermisst, was durch geeignete Wahl von *ϕₘᵢₙ* 303, 706 und *ϕₘₐₓ* 304, 707 erreicht wird. Der gesamte vermessene Winkelbereich entspricht dann gerade *ϕₘₐₓ* - *ϕₘᵢₙ* = *ϕ*_{*S*1} 708. Anschließend wird der Betriebsmodus derart verändert, dass nur der stark dynamische Bereich 704 vermessen wird (siehe Bezugszeichen 709). Die beiden Modi können in beliebiger Art und Weise per Zeitmultiplex einander abwechseln, um auf diese Art den Aufwand der Gesamtmessung zu optimieren.
Ein weiteres Ausführungsbeispiel ist in Fig. 8 dargestellt. Hier wird in stark zerklüftete Bereiche 802 und weniger zerklüftete Bereiche 801 unterschieden. Zunächst ist ein Betriebsmodus des Messgerätes 803 vorgesehen, in welchem die Topologie der Oberfläche mit einer reduzierten Winkelauflösung 804 bestimmt wird. Anschließend wird im Messgerät 803 ein Bereich 801 identifiziert, in welchem die Oberfläche nur wenig Veränderung zeigt. In diesem Bereich lassen sich die fehlenden Zwischenwerte ohne weiteres per Interpolation berechnen. In den übrigen Bereichen 802, 806 wird nun die Anzahl an Messungen durch eine Verkleinerung des Winkelrasters auf Δ*ϕ_{F}* < Δ*ϕ_{L}* (804, 805) erhöht, was zu einer besseren Darstellung der stark zerklüfteten Topologie führt.

Im Resultat führt das dazu, dass im Winkelbereich *φ_{F}* die Oberflächentopologie mit dem Winkelraster Δ*ϕ_{F}* relativ grob aufgelöst erfasst wird, während im Winkelbereich *φ_{L}* mit dem Winkelraster Δ*ϕ_{L}* sehr fein gerasterte Messdaten erfasst werden. Schlussendlich führt dies zu einer deutlichen Reduktion des für die Gesamtmessung benötigten Aufwandes. In einer besonderen Ausgestaltung des Verfahrens werden die Bereiche grober Vermessung und die Bereiche feiner Vermessung vorgegeben. Es mag aber auch möglich sein, diese Bereiche dynamisch in vorab gezeigter Weise oder in anderer geeigneter Weise vom Gerät einmalig oder fortlaufend selbst bestimmen zu lassen.

Weiterhin sei darauf hingewiesen, dass alle vorab vorgestellten Verfahren und Vorrichtungen sowohl für eine zweidimensionale Messung entlang einer Linie als auch für eine dreidimensionale Messung in der Fläche geeignet sind.

Darüber hinaus mag es mit den oben offenbarten Verfahren im Zusammenhang mit dem bereits offenbarten Stand der Technik möglich sein, den Aufwand für die Messung derart zu minimieren, dass eine Realisierung eines topografieerfassenden Füllstandmessgerätes mit einer 4 ... 20 mA Schnittstelle (Loop Powered) möglich wird.

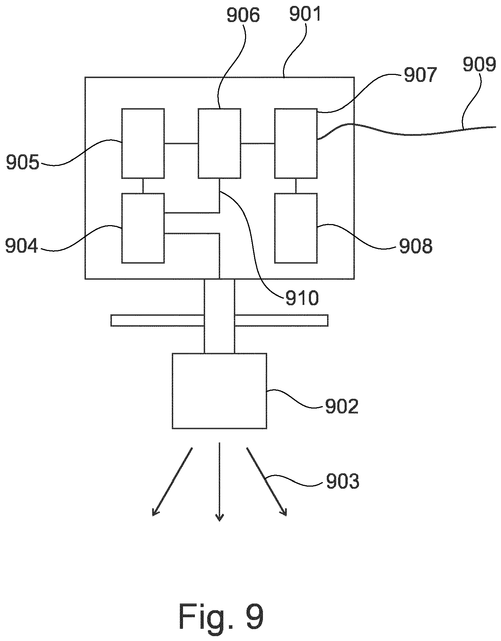

Fig. 9 zeigt eine dafür geeignete Vorrichtung. Das erfindungsgemäße Messgerät 901 weist eine Abstrahleinrichtung 902 auf, welche geeignet ist, ein von einer Messsignaleinheit 904 erzeugtes Signal in vorgebbare Hauptstrahlrichtungen 903 abzustrahlen und zu empfangen. Die Messsignaleinheit 904 mag zum Erzeugen und Empfangen von Messsignalen sowie zur Ansteuerung der Abstrahleinrichtung 902 eingerichtet sein. Weiterhin weist das Gerät 901 eine Speichereinheit 905 auf, in welcher zumindest zwei Echokurven 206, 207 und/oder daraus extrahierte Daten von Echos 106 abgelegt werden können, wobei die Echokurven 206, 207 die Reflexionsverhältnisse entlang zumindest zweier verschiedener Abstrahleinrichtungen 903 abbilden.

Eine Signalverarbeitungseinheit 906 mag unter Verwendung zumindest zweier Echokurven 206, 207 aus zumindest zwei Abstrahlrichtungen 903 in der Lage sein, Kenndaten 305,306 einer Topologie 309 zu bestimmen. Dabei kann zumindest eines der oben vorgeschlagenen Verfahren verwendet werden. Weiterhin besitzt das Gerät 901 eine Energieversorgungseinheit 907, welche in der Lage ist, die Energie aus einer Loop Powered Kommunikationsschnittstelle 909 zu beziehen, und den übrigen Teilen des Sensors 901 zur Verfügung zu stellen. Dazu ist die Energieversorgungseinheit 907 mit zumindest einer Energiespeichereinheit 908, beispielsweise einem Kondensator oder einem Akku, verbunden.
Die Signalverarbeitungseinheit 906 mag über eine Verbindung 910 in der Lage sein, den Messablauf und die Steuerung der Hauptstrahlrichtung 903 zu beeinflussen. Weiterhin mag ein Ablauf des Gerätes vorsehen, zumindest eine Echokurve 206 aus einer Hauptstrahlrichtung 903 zu erfassen, und anschließend eine Pause einzulegen, in welcher in der Energieversorgungseinheit 907 Energie für zumindest eine weitere Messung gesammelt wird. Bei Vorhandensein von ausreichender Energie mag zumindest eine weitere Echokurve 206 aus zumindest einer weiteren Hauptstrahlrichtung 903 erfasst werden. Die Anzahl zu erfassender Echokurven mag mit den oben vorgestellten Verfahren, welche in der Signalverarbeitungseinheit 906 ablaufen können, optimiert werden. Nach Fertigstellung der Topologieberechnungen 309 mag die Energieversorgungseinheit 907 in der Lage sein, vorab definierte Kennwerte der Topologie über eine digitale Schnittstelle 909, beispielsweise eine HART Schnittstelle, nach außen hin zur Verfügung zu stellen. Weiterhin mag es möglich sein, aus der Topologie abgeleitete Werte, beispielsweise die Masse des Mediums im Behälter, von der Signalverarbeitungseinheit 906 bestimmen zu lassen, und über eine analoge Schnittstelle 909, beispielsweise eine 4...20 mA Schnittstelle, nach außen hin bereit zu stellen.

Fig. 10 zeigt eine Messanordnung gemäß einem Ausführungsbeispiel der Erfindung. Es ist ein Behälter 1309 vorgesehen, in dem sich ein Schüttgut 1302 befindet. Es mag auch möglich sein, die Erfindung in Verbindung mit Schütthalden ohne Behälter zu nutzen. Im oberen Bereich des Behälters befindet sich ein Füllstandmessgerät 1300, welches am Deckenbereich des Behälters beweglich angebracht ist. Hierfür ist eine Stellvorrichtung vorgesehen, die ein Kugelgelenk 1307, 1308 aufweist, welches ein Verstellen der Ausrichtung des Füllstandmessgeräts entlang der Winkel ϕ und ϑ zulässt. Die Stellvorrichtung weist einen Aktuator auf (nicht dargestellt), der an den Prozessor 1304 des Füllstandmessgeräts angeschlossen ist, so dass die Hauptabstrahlrichtung 1305 der Antennenanordnung 1301 des Füllstandmessgeräts vollautomatisch eingestellt werden kann.

Das von der Antenne empfangene, reflektierte Sendesignal wird der Echokurvenerzeugungseinheit 1303 übergeben, welche daraus eine Echokurve erzeugt, die dann dem Prozessor, also der Auswerteeinheit des Füllstandmessgeräts übergeben wird. Der Prozessor 1304 ist an eine Speichereinheit 1306 angeschlossen, auf welcher die Echokurven und die Topologiedaten, aus welchen die Topologie der Schüttgutoberfläche berechnet werden kann, gespeichert sind.

Fig. 11 zeigt eine Messanordnung gemäß einem Ausführungsbeispiel der Erfindung. In diesem Ausführungsbeispiel ist ein Reflektor 1401 vorgesehen, der sich in der Hauptabstrahlrichtung 1305 der Antennenanordnung 1301 des Füllstandmessgeräts befindet und über die Verstellvorrichtung 1403, 1404, die ebenfalls in Form eines Kugelgelenks ausgeführt sein kann, verstellt werden kann. Der stationäre Teil 1403 der Verstellvorrichtung ist beispielsweise an der Behälterwand 1402 angebracht.

Ebenso kann das Füllstandmessgerät, wie auch im Ausführungsbeispiel der Fig. 13, über eine eigene Verstellvorrichtung 1307, 1308 an der Behälterwand angebracht sein.

Beispielsweise ist es möglich, dass sich das Füllstandmessgerät lediglich innerhalb einer Ebene verschwenken lässt und der Spiegel in einer zweiten Ebene verschwenkbar ist, so dass die Schüttgutoberfläche vollständig abgescannt werden kann.

Erfindungsgemäß kann die Topologie einer Schüttgutoberfläche mit einer einzigen Antenne ermittelt werden. Die erfindungsgemäße Antenne mag ausgewählt sein aus der Gruppe der Hornantennen, Stabantennen, Patchantennen oder beliebiger Arrayantennen.

Durch den Vergleich einer Vielzahl von Echokurven in einem definierten Bereich bzw. einer definierten Kugelschale (Entfernungszelle) kann die laterale Auflösung eines konventionellen Füllstandmessgeräts weiter verbessert werden, ohne dass hierfür mehrere Sensoren oder mehrere Montagepositionen benötigt werden.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

Im Folgenden werden weitere Ausführungsformen beschrieben:
1. Messgerät (1300) zum Bestimmen der Topologie einer Oberfläche eines in einem Behälter gelagerten Schüttguts (1102), aufweisend:
   eine Antennenanordnung (1301) zum Aussenden eines Sendesignals in eine Hauptabstrahlrichtung der Antennenanordnung und zum Empfang des zumindest an einer Oberfläche des Schüttguts reflektierten Sendesignals;
   eine Echokurvenerzeugungseinheit (1303) zum Erzeugen einer Echokurve aus dem reflektierten und von der Antennenanordnung empfangenen Sendesignal, welche die Signalstärke des reflektierten Sendesignals über einen Entfernungsmessbereich des Messgeräts wiederspiegelt;
   eine Stellvorrichtung (1307, 1308) zum Ändern der Hauptabstrahlrichtung (1305) der Antennenanordnung, so dass eine Serie von Echokurven unter verschiedenen Hauptabstrahlrichtungen erzeugt werden kann;
   wobei die Stellvorrichtung eine Steuerung aufweist, welche zum Ändern der Hauptabstrahlrichtung (1305) der Antennenanordnung derart ausgeführt ist, dass die Anzahl an erzeugten Echokurven der Serie von Echokurven, welche nicht zur Bestimmung der Topologie verwendbar sind, minimiert wird.
2. Messgerät nach Ausführungsform 1,
   wobei die Steuerung zum Ändern der Hauptabstrahlrichtung (1305) der Antennenanordnung derart ausgeführt ist, dass sämtliche von der Stellvorrichtung eingestellte Hauptabstrahlrichtungen innerhalb eines dreidimensionalen Raumes liegen, der die Behälterwand nicht oberhalb eines zuletzt von dem Messgerät bestimmten Füllstands berührt.
3. Messgerät nach einem der vorhergehenden Ausführungsformen,
   wobei die Steuerung beim Ändern der Hauptabstrahlrichtung (1305) der Antennenanordnung zur Berücksichtigung der Geometrie des Behälters, in dem das Schüttgut gelagert ist, ausgeführt ist.
4. Messgerät nach einem der vorhergehenden Ausführungsformen,
   wobei die Steuerung zum Ändern der Hauptabstrahlrichtung (1305) der Antennenanordnung ausschließlich innerhalb eines, einen Teilbereich der Schüttgutoberfläche definierenden Winkelbereichs ausgeführt ist.
5. Messgerät nach einem der vorhergehenden Ausführungsformen,
   wobei die Steuerung zur Bewegung der Hauptabstrahlrichtung entlang einer spiralförmigen Bahn ausgeführt ist.
6. Messgerät nach einem der vorhergehenden Ausführungsformen,
   wobei die Steuerung zur Einstellung des Winkelunterschieds zwischen zwei Hauptabstrahlrichtungen der Antennenanordnung, die für die Erzeugung von zwei aufeinanderfolgenden Echokurven verwendet werden, in Abhängigkeit des zuletzt von dem Messgerät bestimmten Füllstands ausgeführt ist.
7. Messgerät nach einem der vorhergehenden Ausführungsformen,
   wobei die Steuerung zur Einstellung des Winkelunterschieds zwischen zwei Hauptabstrahlrichtungen der Antennenanordnung, die für die Erzeugung von zwei aufeinanderfolgenden Echokurven verwendet werden, in Abhängigkeit von einer lokalen Topologie der Schüttgutoberfläche ausgeführt ist.
8. Messgerät nach einem der vorhergehenden Ausführungsformen,
   wobei die Steuerung zur Bestimmung des maximalen Winkels der Hauptabstrahlrichtung der Antennenanordnung in Abhängigkeit des zuletzt von dem Messgerät bestimmten Füllstands ausgeführt ist.
9. Messgerät nach einem der vorhergehenden Ausführungsformen, aufweisend:
   eine 4...20mA Kommunikationsschnittstelle zum Anschluss an eine 4...20mA Zweidrahtleitung;
   wobei das Füllstandmessgerät ausgeführt ist, lediglich über diese 4...20mA Kommunikationsschnittstelle mit Energie versorgt zu werden.
10. Messgerät nach einem der vorhergehenden Ausführungsformen, aufweisend:
   eine Ethernet-Kommunikationsschnittstelle zum Anschluss an ein lokales Netzwerk (LAN);
   wobei das Füllstandmessgerät ausgeführt ist, lediglich über diese Ethernet-Kommunikationsschnittstelle mit Energie versorgt zu werden.
11. Verwendung eines Messgeräts nach einem der Ausführungsformen 1 bis 10 zur Bestimmung eines Volumenstroms eines Schüttguts, das sich auf einem Förderband befindet.
12. Verwendung eines Messgeräts nach einem der Ausführungsformen 1 bis 10 zur Bestimmung der Masse eines Schüttguts.
13. Verfahren zum Bestimmen der Topologie einer Oberfläche eines Schüttguts (1102), das Verfahren aufweisend die Schritte:
   Aussenden eines Sendesignals in eine Hauptabstrahlrichtung einer Antennenanordnung;
   Empfang eines zumindest an einer Oberfläche des Schüttguts reflektierten Sendesignals;
   Erzeugen einer Echokurve aus dem reflektierten und von der Antennenanordnung empfangenen Sendesignal, welche die Signalstärke des reflektierten Sendesignals über einen Entfernungsmessbereich des Messgeräts wiederspiegelt;
   Ändern der Hauptabstrahlrichtung (1305) der Antennenanordnung, so dass eine Serie von Echokurven unter verschiedenen Hauptabstrahlrichtungen erzeugt wird, wobei die Anzahl an erzeugten Echokurven der Serie von Echokurven, welche nicht zur Bestimmung der Topologie verwendbar sind, minimiert wird.
14. Programmelement, das, wenn es auf dem Prozessor eines Messgeräts ausgeführt wird, das Messgerät veranlasst, die folgenden Schritte durchzuführen:
   Aussenden eines Sendesignals in eine Hauptabstrahlrichtung einer Antennenanordnung;
   Empfang eines zumindest an einer Oberfläche des Schüttguts reflektierten Sendesignals;
   Erzeugen einer Echokurve aus dem reflektierten und von der Antennenanordnung empfangenen Sendesignal, welche die Signalstärke des reflektierten Sendesignals über einen Entfernungsmessbereich des Messgeräts wiederspiegelt;
   Ändern der Hauptabstrahlrichtung (1305) der Antennenanordnung, so dass eine Serie von Echokurven unter verschiedenen Hauptabstrahlrichtungen erzeugt wird, wobei die Anzahl an erzeugten Echokurven der Serie von Echokurven, welche nicht zur Bestimmung der Topologie verwendbar sind, minimiert wird.
15. Computerlesbares Medium, auf dem ein Programmelement gespeichert ist, das, wenn es auf dem Prozessor eines Messgeräts ausgeführt wird, das Messgerät veranlasst, die folgenden Schritte durchzuführen:
   Aussenden eines Sendesignals in eine Hauptabstrahlrichtung einer Antennenanordnung;
   Empfang eines zumindest an einer Oberfläche des Schüttguts reflektierten Sendesignals;
   Erzeugen einer Echokurve aus dem reflektierten und von der Antennenanordnung empfangenen Sendesignal, welche die Signalstärke des reflektierten Sendesignals über einen Entfernungsmessbereich des Messgeräts wiederspiegelt;
   Ändern der Hauptabstrahlrichtung (1305) der Antennenanordnung, so dass eine Serie von Echokurven unter verschiedenen Hauptabstrahlrichtungen erzeugt wird, wobei die Anzahl an erzeugten Echokurven der Serie von Echokurven, welche nicht zur Bestimmung der Topologie verwendbar sind, minimiert wird.

## Patentansprüche

1. Messgerät (1300) zum Bestimmen der Topologie einer Oberfläche eines in einem Behälter gelagerten Schüttguts (1102), aufweisend:
eine Antennenanordnung (1301) zum Aussenden eines Sendesignals in eine Hauptabstrahlrichtung der Antennenanordnung und zum Empfang des zumindest an einer Oberfläche des Schüttguts reflektierten Sendesignals;
eine Echokurvenerzeugungseinheit (1303) zum Erzeugen einer Echokurve aus dem reflektierten und von der Antennenanordnung empfangenen Sendesignal, welche die Signalstärke des reflektierten Sendesignals über einen Entfernungsmessbereich des Messgeräts wiederspiegelt;
eine Stellvorrichtung (1307, 1308) zum Ändern der Hauptabstrahlrichtung (1305) der Antennenanordnung, so dass eine Serie von Echokurven unter verschiedenen Hauptabstrahlrichtungen erzeugt werden kann;
eine 4...20mA Kommunikationsschnittstelle zum Anschluss an eine 4...20mA Zweidrahtleitung;
wobei das Füllstandmessgerät ausgeführt ist, lediglich über diese 4...20mA Kommunikationsschnittstelle mit Energie versorgt zu werden..

2. Messgerät nach Anspruch 1,
wobei die Steuerung zum Ändern der Hauptabstrahlrichtung (1305) der Antennenanordnung derart ausgeführt ist, dass sämtliche von der Stellvorrichtung eingestellte Hauptabstrahlrichtungen innerhalb eines dreidimensionalen Raumes liegen, der die Behälterwand nicht oberhalb eines zuletzt von dem Messgerät bestimmten Füllstands berührt.

3. Messgerät nach der vorhergehenden Ansprüche,
wobei die Steuerung beim Ändern der Hauptabstrahlrichtung (1305) der Antennenanordnung zur Berücksichtigung der Geometrie des Behälters, in dem das Schüttgut gelagert ist, ausgeführt ist.

4. Messgerät nach einem der vorhergehenden Ansprüche,
wobei die Steuerung zum Ändern der Hauptabstrahlrichtung (1305) der Antennenanordnung ausschließlich innerhalb eines, einen Teilbereich der Schüttgutoberfläche definierenden Winkelbereichs ausgeführt ist.

5. Messgerät nach einem der vorhergehenden Ansprüche,
wobei die Steuerung zur Bewegung der Hauptabstrahlrichtung entlang einer spiralförmigen Bahn ausgeführt ist.

6. Messgerät nach einem der vorhergehenden Ansprüche,
wobei die Steuerung zur Einstellung des Winkelunterschieds zwischen zwei Hauptabstrahlrichtungen der Antennenanordnung, die für die Erzeugung von zwei aufeinanderfolgenden Echokurven verwendet werden, in Abhängigkeit des zuletzt von dem Messgerät bestimmten Füllstands ausgeführt ist.

7. Messgerät nach einem der vorhergehenden Ansprüche,
wobei die Steuerung zur Einstellung des Winkelunterschieds zwischen zwei Hauptabstrahlrichtungen der Antennenanordnung, die für die Erzeugung von zwei aufeinanderfolgenden Echokurven verwendet werden, in Abhängigkeit von einer lokalen Topologie der Schüttgutoberfläche ausgeführt ist.

8. Messgerät nach einem der vorhergehenden Ansprüche,
wobei die Steuerung zur Bestimmung des maximalen Winkels der Hauptabstrahlrichtung der Antennenanordnung in Abhängigkeit des zuletzt von dem Messgerät bestimmten Füllstands ausgeführt ist.

9. Messgerät nach einem der vorhergehenden Ansprüche,
wobei die Stellvorrichtung eine Steuerung aufweist, welche zum Ändern der Hauptabstrahlrichtung (1305) der Antennenanordnung derart ausgeführt ist, dass die Anzahl an erzeugten Echokurven der Serie von Echokurven, welche nicht zur Bestimmung der Topologie verwendbar sind, minimiert wird.

10. Messgerät nach einem der vorhergehenden Ansprüche, aufweisend:
eine Ethernet-Kommunikationsschnittstelle zum Anschluss an ein lokales Netzwerk (LAN);
wobei das Füllstandmessgerät ausgeführt ist, lediglich über diese Ethernet-Kommunikationsschnittstelle mit Energie versorgt zu werden.

11. Verwendung eines Messgeräts nach einem der Ansprüche 1 bis 10 zur Bestimmung eines Volumenstroms eines Schüttguts, das sich auf einem Förderband befindet.

12. Verwendung eines Messgeräts nach einem der Ansprüche 1 bis 10 zur Bestimmung der Masse eines Schüttguts.

13. Verfahren zum Bestimmen der Topologie einer Oberfläche eines Schüttguts (1102), das Verfahren aufweisend die Schritte:
Versorgen eines Füllstandmessgeräts lediglich über eine 4...20mA Kommunikationsschnittstelle zum Anschluss an eine 4...20mA Zweidrahtleitung mit Energie;
Aussenden eines Sendesignals in eine Hauptabstrahlrichtung einer Antennenanordnung;
Empfang eines zumindest an einer Oberfläche des Schüttguts reflektierten Sendesignals;
Erzeugen einer Echokurve aus dem reflektierten und von der Antennenanordnung empfangenen Sendesignal, welche die Signalstärke des reflektierten Sendesignals über einen Entfernungsmessbereich des Messgeräts wiederspiegelt;
Ändern der Hauptabstrahlrichtung (1305) der Antennenanordnung, so dass eine Serie von Echokurven unter verschiedenen Hauptabstrahlrichtungen erzeugt wird.

14. Programmelement, das, wenn es auf dem Prozessor eines Messgeräts ausgeführt wird, das Messgerät veranlasst, die folgenden Schritte durchzuführen:
Versorgen eines Füllstandmessgeräts lediglich über eine 4...20mA Kommunikationsschnittstelle zum Anschluss an eine 4...20mA Zweidrahtleitung mit Energie;
Aussenden eines Sendesignals in eine Hauptabstrahlrichtung einer Antennenanordnung;
Empfang eines zumindest an einer Oberfläche des Schüttguts reflektierten Sendesignals;
Erzeugen einer Echokurve aus dem reflektierten und von der Antennenanordnung empfangenen Sendesignal, welche die Signalstärke des reflektierten Sendesignals über einen Entfernungsmessbereich des Messgeräts wiederspiegelt;
Ändern der Hauptabstrahlrichtung (1305) der Antennenanordnung, so dass eine Serie von Echokurven unter verschiedenen Hauptabstrahlrichtungen erzeugt wird.

15. Computerlesbares Medium, auf dem ein Programmelement gespeichert ist, das, wenn es auf dem Prozessor eines Messgeräts ausgeführt wird, das Messgerät veranlasst, die folgenden Schritte durchzuführen:
Versorgen eines Füllstandmessgeräts lediglich über eine 4...20mA Kommunikationsschnittstelle zum Anschluss an eine 4...20mA Zweidrahtleitung mit Energie;
Aussenden eines Sendesignals in eine Hauptabstrahlrichtung einer Antennenanordnung;
Empfang eines zumindest an einer Oberfläche des Schüttguts reflektierten Sendesignals;
Erzeugen einer Echokurve aus dem reflektierten und von der Antennenanordnung empfangenen Sendesignal, welche die Signalstärke des reflektierten Sendesignals über einen Entfernungsmessbereich des Messgeräts wiederspiegelt;
Ändern der Hauptabstrahlrichtung (1305) der Antennenanordnung, so dass eine Serie von Echokurven unter verschiedenen Hauptabstrahlrichtungen erzeugt wird.
